# EUROPÄISCHE PATENTANMELDUNG

(11) **EP 3 473 556 A1**
(43) Veröffentlichungstag der Anmeldung: **24.04.2019**
(21) Anmeldenummer: 18182829.4
(22) Anmeldetag: 11.07.2018
(51) Int. Cl.: B65B 51/10, B65B 51/14, B65B 51/26

(54) **VERFAHREN UND VORRICHTUNG ZUR LÄNGSSIEGELUNG VON SCHLAUCHBEUTELVERPACKUNGEN SOWIE SCHLAUCHBEUTELVERPACKUNGSMASCHINE MIT EINER SOLCHEN VORRICHTUNG**

(30) Priorität: 20.10.2017 DE 102017218807
(71) Anmelder: Theegarten-Pactec GmbH & Co. KG, 01237 Dresden (DE)
(72) Erfinder: Wehner, Gert, 01328 Dresden (DE); Bergmann, Matthias, 01728 Bannewitz (DE); Walter, Christian, 01237 Dresden (DE); König, Peter, 01067 Dresden (DE); John, Steffen, 01217 Dresden (DE)
(74) Vertreter: Grünecker Patent- und Rechtsanwälte PartG mbB

(57) **Zusammenfassung**

Die vorliegende Erfindung betrifft ein Verfahren und eine Vorrichtung zur Längssiegelung von Schlauchbeutelverpackungen sowie eine Schlauchbeutelverpackungsmaschine mit einer solchen Vorrichtung. Um ein Verfahren bereitzustellen, welche den Aufwand für die Maschineneinstellung verringern und die Verpackungsleistung erhöhen kann, umfasst das erfindungsgemäße Verfahren folgende Schritte:
Schritt A: Bilden eines Schlauchbeutels (3) aus einer Heißsiegelfolie (2).
Schritt B: Beaufschlagen des Schlauchbeutels (2) mit einer Heizleistung ausschließlich innerhalb einer Heizstrecke (18) und gegebenenfalls wenigstens einem der Heizstrecke (18) nachgelagerten Siegelrollenpaar (18).
Schritt C: Längssiegelung des Schlauchbeutels (2) durch mindestens ein Siegelrollenpaar (15).

Die Erfindung offenbart ebenso eine entsprechende Vorrichtung zur Längssiegelung von Schlauchbeutelverpackungen sowie eine Schlauchbeutelverpackungsmaschine mit einer solchen Vorrichtung.

## Beschreibung

Die vorliegende Erfindung betrifft ein Verfahren und eine Vorrichtung zur Längssiegelung von Schlauchbeutelverpackungen sowie eine Schlauchbeutelverpackungsmaschine mit einer solchen Vorrichtung.

Bei horizontalen Schlauchbeutelverpackungsmaschinen liegt die Förderrichtung bzw. Transportebene in der Horizontalen. Um die zu verpackenden Produkte oder Produktgruppen wird eine endlose Packmittelrolle mittels einer sogenannten Formschulter zu einem Schlauch geformt, der auch als Folienschlauch oder Schlauchbeutel bezeichnet wird, wobei die seitlichen Packmittelränder zu einer Flossennaht übereinandergelegt und versiegelt werden. Der Transport des Schlauches mit den darin liegenden Produkten, und damit auch das Abrollen des Packmittels von der Packmittelrolle, werden in der Regel mit gegenläufig drehenden Rollenpaaren durchgeführt, welche die Flossennaht transportieren.

Bei den Packmitteln wird zwischen Heißsiegelfolien und Kaltfolien mit einer Klebemaske unterschieden. Kaltfolien werden unter Einwirkung von Druck miteinander verklebt. Heißsiegelfolien werden unter der Einwirkung von Wärme und Druck miteinander versiegelt. Die vorliegende Erfindung behandelt nur Anwendungen für Heißsiegelfolien.

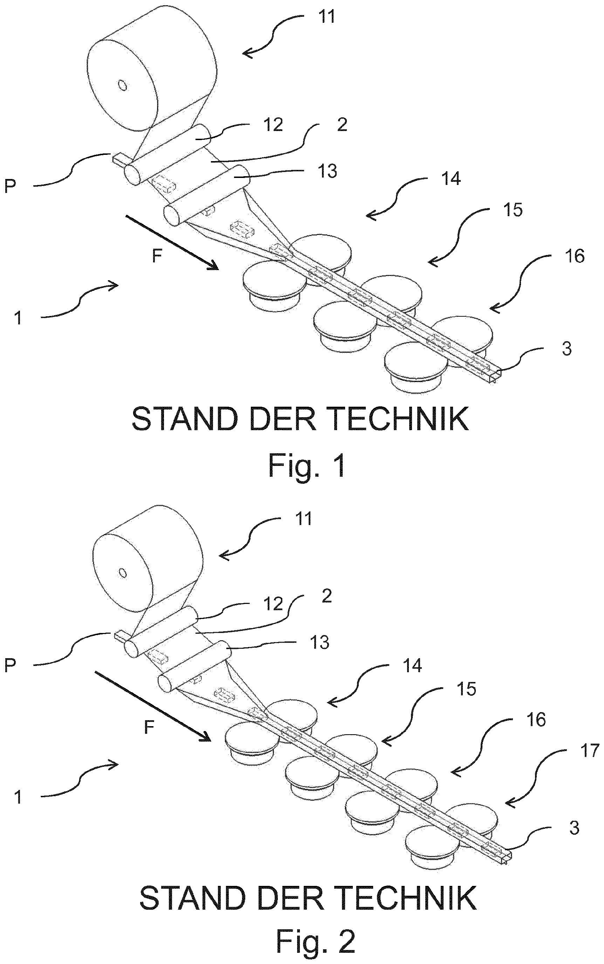

Aus dem schematisch im Zusammenhang mit Figuren 1 bis 3 beschriebenen Stand der Technik sind Verfahren und Vorrichtungen 1 (Fig. 1 bis 3) bekannt, welche den aus einer Heißsiegelfolie 2 gebildeten Schlauchbeutel 3 durch mehrere in Förderrichtung F hintereinander liegende Rollenpaare transportieren und siegeln. Häufig werden drei Rollenpaare 14, 15, 16 verwendet (Fig. 1). Dabei ist in der Regel das erste Rollenpaar 14 kalt und wird zum Abzug des Packmittels 2 von der Rolle 11 sowie zum Zusammenfügen der zu versiegelnden seitlichen Packmittelränder und zum Transport des dadurch gebildeten Schlauches 3 eingesetzt. Das zweite Rollenpaar 15 ist beheizt und das dritte Rollenpaar 16 kann ebenfalls beheizt, aber auch kalt sein. Das zweite und dritte Rollenpaar 15, 16 weisen an der Rollenmantelfläche ein gleiches Profil auf, welches beim Siegeln mittels Druck in die beiden aufgeschmolzenen und übereinanderliegenden Packmittelbereiche geprägt wird, wodurch die Flossennaht entsteht. Die an der Rollenmantelfläche profilierten Rollenpaare 15, 16 werden auch Siegelrollenpaare genannt. Die beiden Siegelrollenpaare 15, 16 sind auf derselben Ebene bzw. Höhe angeordnet und dienen auch zum Transport des Schlauches 3.

Aus dem Stand der Technik sind weiterhin Verfahren und Vorrichtungen 1 zur Längssiegelung von Schlauchbeutelverpackungen aus speziellen Packmitteln 2 bekannt (Fig. 2), die für einen zusätzlichen Wärmeeintrag ein drittes Siegelrollenpaar 17 erfordern, um das Packmittel 2 durch insgesamt vier in Förderrichtung F hintereinander liegende Rollenpaare 14, 15, 16, 17 zu transportieren und zu siegeln. Durch das zusätzlich beheizte Siegelrollenpaar 17 erhöht sich der Wärmeeintrag zum Aufschmelzen in die übereinanderliegenden Packmittelbereiche, wodurch höhere Fördergeschwindigkeiten realisiert werden können.

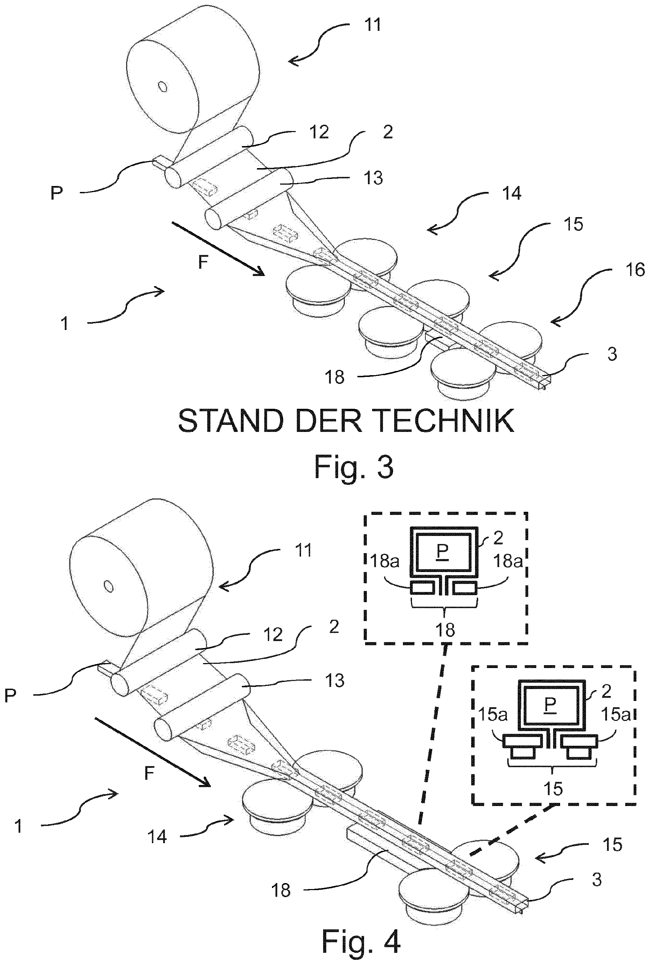

Ebenfalls aus dem Stand der Technik sind Verfahren und Vorrichtungen 1 bekannt (Fig. 3), die eine zusätzliche Vorheizung 18 zeigen. Die Vorheizung 18 ist in Förderrichtung F nach einem beheizten Siegelrollenpaar 15 und vor einem weiteren Siegelrollenpaar 16, das beheizt oder kalt ist, angeordnet. Durch die zusätzliche Vorheizung 18 erhöht sich der Wärmeeintrag zum Aufschmelzen in die übereinanderliegenden Packmittelbereiche, wodurch höhere Fördergeschwindigkeiten realisiert werden können.

Um eine qualitativ hochwertige Siegelnaht mit einem ansprechenden optischen Erscheinungsbild herzustellen, muss der Profilabdruck, der von einem in Förderrichtung F ersten Siegelrollenpaar 15 auf der Folienflosse hinterlassen wird, von jedem in Förderrichtung F folgenden Siegelrollenpaar 16 genau getroffen werden. Dazu ist eine sehr genaue Maschineneinstellung notwendig. Bei speziellen Packmitteln, die für einen zusätzlichen Wärmeeintrag ein drittes Siegelrollenpaar 17 erfordern, erhöht sich der Aufwand für die Maschineneinstellung entsprechend. Im Ergebnis wird dadurch die Verpackungsleistung effektiv beschränkt.

Der Wirkungsgrad beheizter Siegelrollenpaare ist sehr gering, da der Wärmeeintrag nur in einem sehr kleinen lokal begrenzten Bereich in das Packmittel erfolgt. Die Restenergie wird in den Maschineninnenraum abgestrahlt. Das kann die Produktqualität von Schokolade oder anderen temperaturempfindlichen Produkten beeinflussen.

Der vorliegenden Erfindung liegt die Aufgabe zugrunde, ein Verfahren und eine Vorrichtung zur Längssiegelung von Schlauchbeutelverpackungen sowie eine Schlauchbeutelverpackungsmaschine mit einer solchen Vorrichtung bereitzustellen, welche den Aufwand für die Maschineneinstellung verringern und die Verpackungsleistung erhöhen können.

Zur Lösung dieser Aufgabe umfasst das erfindungsgemäße Verfahren nach Anspruch 1 folgende Schritte:
Schritt A: Bilden eines Schlauchbeutels aus einer Heißsiegelfolie.
Schritt B: Beaufschlagen des Schlauchbeutels mit einer Heizleistung erstmalig und/oder ausschließlich innerhalb einer Heizstrecke.
Schritt C: Längssiegelung des Schlauchbeutels durch mindestens ein Siegelrollenpaar.

Vorzugsweise wird der Schlauchbeutel in Schritt A in einem kontinuierlichen Strang durch Überlappung randseitiger Abschnitte einer streifenförmigen Heißsiegelfolie gebildet. Die Längsrichtung der Heißsiegelfolie entspricht vorzugsweise der Längsachse des Schlauchbeutels. Die Förderrichtung des Schlauchbeutels bzw. der den Schlauchbeutel bildenden Heißsiegelfolie fällt vorzugsweise mit der Längsrichtung der Heißsiegelfolie bzw. mit der Längsachse des Schlauchbeutels zusammen bzw. verläuft parallel dazu. Die durch Überlappung der randseitigen Abschnitte der Heißsiegelfolie gebildete Flosse verläuft vorzugsweise parallel zur Längsachse des Schlauchbeutels. Gemäß Schritt B wird der Schlauchbeutel innerhalb der Heizstrecke erstmalig und/oder ausschließlich mit einer Heizleistung beaufschlagt. Innerhalb der Heizstrecke wird der zuvor unbeheizte und mit Umgebungstemperatur zugeführte Schlauchbeutel vorzugsweise nur lokal, dafür aber gezielt, nämlich im Bereich der die Flosse und die Längssiegelnaht bildenden überlappenden Abschnitte der Heißsiegelfolie, mit einer Heizleistung beaufschlagt. Im Bereich der Flosse kann die Heißsiegelfolie gezielt mit Heizleistung beaufschlagt werden und anschließend durch in Schritt C Einwirkung von Kraft über das lediglich eine Siegelrollenpaar gezielt längsversiegelt werden. Erfindungsgemäß ist der Heizstrecke - im Gegensatz zur bekannten Ausführung gemäß Fig. 3 - kein beheiztes Rollenpaar vorgeschaltet. Vorzugsweise erfolgt die Längssiegelung des Schlauchbeutels in Schritt C durch lediglich ein einzelnes Siegelrollenpaar. Wenn sowohl die der Heizstrecke vorgeschalteten Rollenpaare als auch die nachgeschalteten Rollenpaare kalt und unbeheizt sind, wird der Schlauchbeutel in Schritt B gemäß der zweiten Alternative ausschließlich innerhalb der Heizstrecke mit einer Heizleistung beaufschlagt.

Vorteilhafte Weiterbildungen der Erfindung sind Gegenstände der Unteransprüche.

Es kann von Vorteil sein, wenn Schritt A wenigstens einen der folgenden Teilschritte aufweist:
Teilschritt A1: Bereitstellen einer Heißsiegelfolie in einem kontinuierlichen (endlosen) Strang, vorzugsweise durch Abrollen von einer Rolle, wobei die Heißsiegelfolie bevorzugt eine Dicke im Bereich von 30 µm, 40 µm, 50 µm oder 60 µm (Untergrenze) bis 70 µm, 80 µm, 90 µm oder 100 µm (Obergrenze) aufweist. Die Heißsiegelfolie besteht vorzugsweise aus Kunststoff und/oder Metall und umfasst eine, zwei, drei, vier oder mehr Schichten. Vorzugsweise umfasst die Heißsiegelfolie wenigstens eine Tragschicht aus Kunststoff, wenigstens eine Sperrschicht aus Kunststoff oder Metall, vorzugsweise Aluminium, und wenigstens eine wärmeaktivierbare Klebstoffbeschichtung.
Teilschritt A2: Spannen und/oder Glätten einer Heißsiegelfolie, vorzugsweise in einem kontinuierlichen Strang. Durch diese Maßnahmen kann die Heißsiegelfolie vor Bildung des Schlauchbeutels optimal vorbereitet werden.
Teilschritt A3: Bilden einer Splicestelle durch Überlagen eines Endabschnitts eines ersten Strangs einer Heißsiegelfolie mit einem Endabschnitt eines zweiten Strangs einer Heißsiegelfolie und Verbinden der Endabschnitte der ersten und zweiten Stränge der Heißsiegelfolie mit wenigstens einem Klebestreifen. Durch diese automatisch oder händisch auszuführende Maßnahme kann aus diskreten bzw. getrennten Strängen ein kontinuierlicher bzw. endloser Strang einer Heißsiegelfolie gebildet werden. Dadurch lassen sich die Ausfallzeit einer Schlauchbeutelverpackungsvorrichtung minimieren und die Maschinenverfügbarkeit sowie die Verpackungsleistung erhöhen. Der Klebestreifen weist vorzugsweise eine Dicke im Bereich von 20 µm, 30 µm oder 40 µm (Untergrenze) bis 60 µm, 80 µm oder 100 µm (Obergrenze) auf.
Teilschritt A4: Zuführen von Produkten zu der Heißsiegelfolie, vorzugsweise in einem kontinuierlich geförderten Produktstrom, bevorzugt zu einer Unterseite der in einem kontinuierlichen Strang exakt oder im Wesentlichen in horizontaler Richtung geförderten Heißsiegelfolie, besonders bevorzugt unter Verwendung eines Formschuhs. Dies begünstigt, dass sich die die Längssiegelnaht bildenden und zu verbindenden randseitigen Abschnitte der Heißsiegelfolie um das zu verpackende Produkt legen. Der Formschuh ist beispielsweise derart ausgestaltet, dass die zugeführte Heißsiegelfolie die zugeführten Produkte vollständig umgibt, wobei an der Längskante des dabei entstehenden Schlauchbeutels eine Überlappung der entsprechenden Kantenbereiche der Heißsiegelfolie eingestellt wird. Im Bereich der Überlappung wird der Schlauchbeutel in Schritt C längsversiegelt.
Teilschritt A5: Anordnen der Heißsiegelfolie in Schlauchform zur Bildung des Schlauchbeutels, vorzugsweise in einem kontinuierlichen Strang, bevorzugt unter Ausbildung einer Flosse aus zwei sich überlappenden Abschnitten der Heißsiegelfolie, besonders bevorzugt durch Zusammenfügen seitlicher Ränder der Heißsiegelfolie, ganz besonders bevorzugt unter Verwendung einer Formschulter und/oder durch Einzug der Heißsiegelfolie in den Walzenspalt eines Abzugsrollenpaars. Diese Maßnahme erleichtert die weitere Verarbeitung der Heißsiegelfolie im Bereich der Heizstrecke.
Teilschritt A6: Aufnahme von Produkten in der schlauchförmig angeordneten Heißsiegelfolie. Durch Anordnen der Produkte in der bereits schlauchförmig angeordneten Heißsiegelfolie kann die Lage der zu verpackenden Produkte gut bestimmt werden.
Teilschritt A7: Förderung der Heißsiegelfolie, vorzugsweise in einem kontinuierlichen Strang, bevorzugt durch Antreiben einer oder beider Rollen des Abzugsrollenpaars und/oder des Siegelrollenpaars. Die Rollen des Abzugsrollenpaars und/oder des Siegelrollenpaars werden dabei gegenläufig angetrieben, sodass die Oberflächengeschwindigkeiten der Rollen im jeweiligen Spaltbereich nach Betrag und Richtung mit der Fördergeschwindigkeit der Heißsiegelfolie übereinstimmen.

Es kann aber auch sinnvoll sein, wenn Schritt B wenigstens einen der folgenden Teilschritte aufweist:
Teilschritt B1: Einziehen einer aus zwei überlappenden Abschnitten der Heißsiegelfolie gebildeten Flosse in den Heizspalt zwischen zwei gegenüberliegenden Heizschienen der Heizstrecke, vorzugsweise in einem kontinuierlichen Strang. Auf diese Weise kann der Schlauchbeutel besonders gleichmäßig ausgebildet werden.
Teilschritt B2: Einstellen des Heizspalts in Abhängigkeit von einer Dicke der Heißsiegelfolie, vorzugsweise auf einen Wert, der exakt oder im Wesentlichen (+/- 5%, vorzugsweise +/- 2%, bevorzugt +/- 1%) so groß ist wie die doppelte Dicke der Heißsiegelfolie, bevorzugt derart, dass beide Heizschienen der Heizstrecke die Heißsiegelfolie kontaktieren, besonders bevorzugt über die gesamte Länge und/oder Höhe jeder Heizschiene. Die Einstellung des Heizspalts kann automatisch oder händisch erfolgen. Durch Einstellung des Heizspalts in Abhängigkeit von einer Dicke der Heißsiegelfolie kann der Kontaktdruck der Heizschienen auf die Oberfläche der Heißsiegelfolie, und damit der Wärmeübergangskoeffizient zwischen der Heizstrecke und der Heißsiegelfolie, optimal eingestellt werden. Die Heizschienen der Heizstrecke weisen vorzugsweise die gleiche Länge auf und die gegenüberliegenden Kontaktflächen der Heizschienen erstrecken sich vorzugsweise über deren gesamte Länge parallel zueinander.
Teilschritt B3: Vergrößern des Heizspalts, vorzugsweise zur Durchführung einer Splicestelle der Heißsiegelfolie durch den Heizspalt, bevorzugt auf einen Wert, der exakt oder im Wesentlichen (+/- 5%, vorzugsweise +/- 2%, bevorzugt +/- 1%) so groß ist wie vierfache Dicke der Heißsiegelfolie zuzüglich der doppelten Dicke eines Klebestreifens, besonders bevorzugt in Verbindung mit einer Verringerung der Fördergeschwindigkeit der Heißsiegelfolie. Dadurch kann verhindert werden, dass die Heißsiegelfolie im Bereich lokaler Verdickungen durch einen zu eng eingestellten Heizspalt beschädigt wird. Die Verringerung der Fördergeschwindigkeit der Heißsiegelfolie kann gleichzeitig mit der Vergrößerung des Heizspalts erfolgen oder zu einem früheren oder späteren Zeitpunkt.
Teilschritt B4: Verkleinern des Heizspalts, vorzugsweise nach Durchführung einer Splicestelle der Heißsiegelfolie durch den Heizspalt, bevorzugt auf einen Wert, der exakt oder im Wesentlichen (+/- 5%, vorzugsweise +/- 2%, bevorzugt +/- 1%) so groß ist wie die doppelte Dicke der Heißsiegelfolie, besonders bevorzugt in Verbindung mit einer Erhöhung der Fördergeschwindigkeit der Heißsiegelfolie. Dadurch kann auch bei uneinheitlichen Dicken der Heißsiegelfolie jeweils eine effektive Beaufschlagung mit Heizleistung innerhalb der Heizstrecke erfolgen. Die Erhöhung der Fördergeschwindigkeit der Heißsiegelfolie kann gleichzeitig mit der Verkleinerung des Heizspalts erfolgen oder zu einem früheren oder späteren Zeitpunkt.
Teilschritt B5: Beaufschlagen der Heißsiegelfolie im Bereich der Heizstrecke mit einer Heizleistung im Bereich von 100 bis 500 W, im Bereich von 200 bis 400 W, oder mit einer Heizleistung von 300 W, vorzugsweise gleichmäßig über beide Heizschienen der Heizstrecke, bevorzugt gleichmäßig über die Länge und/oder Höhe jeder der beiden Heizschienen der Heizstrecke. Derartige Heizleistungen erweisen sich für gängige Heißsiegelfolien als besonders wirkungsvoll.
Teilschritt B6: Fördern der Heißsiegelfolie im Bereich der Heizstrecke mit einer Fördergeschwindigkeit im Bereich von 0,2 m/s, 0,5 m/s, 0,75 m/s oder 1 m/s (Untergrenze) bis 1,5 m/s, 2 m/s, 2,5 m/s, 3 m/s, 4 m/s oder 5 m/s (Obergrenze). Bei diesen Fördergeschwindigkeiten ergibt sich ein optimales Verhältnis zwischen Verpackungsleistung und einer schonenden Erwärmung der Heißsiegelfolie.
Teilschritt B7: Erwärmen der Heißsiegelfolie im Bereich der Heizstrecke von einer Temperatur im Bereich von 10°C, 15°C oder 20°C bis 25°C, 30°C oder 35° C (Umgebungstemperatur)auf eine Temperatur im Bereich von 50°C, 75°C oder 90°C, bis 100°C, 125°C oder 150°C. Dadurch kann bereits ein Großteil der zur Längssiegelung erforderlichen Wärmemenge innerhalb der Heizstrecke in die Heißsiegelfolie eingebracht werden. Vorzugsweise weist die Heißsiegelfolie nach der Heizstrecke eine um 25°C, 50°C oder 75°C höhere Temperatur auf als vor der Heizstrecke.

Es kann aber auch nützlich sein, wenn Schritt C wenigstens einen der folgenden Teilschritte aufweist:
Teilschritt C1: Einziehen einer aus zwei sich überlappenden Abschnitten der Heißsiegelfolie gebildeten Flosse in den Siegelspalt zwischen den Siegelrollen des Siegelrollenpaars, vorzugsweise in einem kontinuierlichen Strang.
Teilschritt C2: Beaufschlagen der Heißsiegelfolie im Bereich des Siegelrollenpaars mit einer Heizleistung im Bereich von 200 bis 1000 W, im Bereich von 400 bis 600 W, oder mit einer Heizleistung von 560 W, vorzugsweise gleichmäßig über beide Siegelrollen des Siegelrollenpaars. Derartige Heizleistungen erweisen sich zur Längssiegelung der Heißsiegelfolie als besonders vorteilhaft. Vorzugsweise ist die Gesamtheizleistung des Siegelrollenpaars größer als die Gesamtheizleistung der Heizstrecke. Die Gesamtheizleistung des Siegelrollenpaars liegt vorzugsweise im Bereich von 120%, 150% oder 175% (Untergrenze) bis 200%, 250% oder 300 % (Obergrenze) der Gesamtheizleistung der Heizstrecke.
Teilschritt C3: Fördern der Heißsiegelfolie im Bereich des Siegelrollenpaars mit einer Fördergeschwindigkeit im Bereich von 0,2 m/s, 0,5 m/s, 0,75 m/s oder 1 m/s (Untergrenze) bis 1,5 m/s, 2 m/s, 2,5 m/s, 3 m/s, 4 m/s oder 5 m/s (Obergrenze). Bei diesen Fördergeschwindigkeiten ergibt sich ein optimales Verhältnis zwischen Verpackungsleistung und einer schonenden Längssiegelung der Heißsiegelfolie.
Teilschritt C4: Erwärmen der Heißsiegelfolie im Bereich des Siegelrollenpaars auf eine Temperatur im Bereich von 75°C, 100°C oder 125°C, bis 150°C, 175°C oder 200°C. Bei diesen Temperaturen kann die Längssiegelung der Heißsiegelfolie optimal bewerkstelligt werden.
Teilschritt C5: Profilieren der Heißsiegelfolie auf Endkontur durch Prägen des Profils der Siegelrollen des Siegelrollenpaars auf die Flosse. Vorzugsweise ist die Heißsiegelfolie zumindest im Bereich der Flosse unprofiliert und wird durch das einzige Siegelrollenpaar erstmals und abschließend geprägt sowie längsversiegelt. Dies bedeutet, dass die Längssiegelnaht bzw. Flossennaht aus den zwei überlappenden und unprofilierten Abschnitten der Heißsiegelfolie durch mindestens ein Siegelrollenpaar in einem Zug abschließend profiliert bzw. bearbeitet wird.
Teilschritt C6: Bildung luftdichter Schlauchbeutelverpackungen unter Einschluss jeweils wenigstens eines Produkts jeweils durch Quersiegelung des Schlauchbeutels. Vorzugsweise wird der Schlauchbeutel nach jedem Produkt oder nach jeweils einer Gruppe von Produkten mit einer Quersiegelnaht versehen, sodass die Produkte zwischen der Längssiegelnaht und zwei Quersiegelnähten luftdicht in dem durch die Heißsiegelfolie gebildeten Schlauchbeutel verpackt sind. Die Anbringung der Quersiegelnähte an dem Schlauchbeutel erfolgt vorzugsweise bei einer Förderung des Schlauchbeutels in einem kontinuierlichen Strang.
Teilschritt C7: Abtrennen einzelner Schlauchbeutelverpackungen jeweils im Bereich einer Quersiegelnaht. Dies erfolgt vorzugsweise so, dass die Quersiegelnaht nicht durchbrochen wird.

Ein weiterer Aspekt der Erfindung betrifft eine Vorrichtung zur Längssiegelung von Schlauchbeutelverpackungen, vorzugsweise für horizontale Schlauchbeutelverpackungsmaschinen, umfassend mindestens ein Siegelrollenpaar zur Längssiegelung eines aus einer Heißsiegelfolie gebildeten Schlauchbeutels, wobei dem Siegelrollenpaar eine Heizstrecke vorgeschaltet ist, um die Heißsiegelfolie vor der Längssiegelung des Schlauchbeutels erstmalig und/oder ausschließlich innerhalb der Heizstrecke mit einer Heizleistung zu beaufschlagen. Durch die Längssiegelung der zuvor mit einer Heizleistung beaufschlagten Heißsiegelfolie zur Bildung des Schlauchbeutels mit einem Siegelrollenpaar entfällt die Notwendigkeit, die Profilabdrücke mehrere hintereinander geschalter Siegelrollenpaare exakt aufeinander abzustimmen, um eine qualitativ hochwertige und ästhetisch ansprechende Längssiegelnaht zu erzeugen. Dadurch kann die Herstellung der Längssiegelnaht erheblich erleichtert werden und eine höhere Verpackungsleistung erzielt werden.

Es kann sich als praktisch erweisen, wenn die Heizstrecke (gemessenen Förderrichtung) eine Länge im Bereich von 50 bis 200 mm, vorzugsweise im Bereich von 100 bis 150 mm aufweist. Über eine Heizstrecke mit derartiger Länge kann die Heizleistung optimal mit moderatem Kontaktdruck und angemessener Erwärmungsgeschwindigkeit auf die Heißsiegelfolie übertragen werden.

Es kann aber auch sinnvoll sein, wenn der der Heizspalt zwischen den Heizschienen der Heizstrecke einstellbar ist, vorzugsweise automatisch, bevorzugt in Abhängigkeit von einer Dicke der Heißsiegelfolie, besonders bevorzugt durch Vergrößerung des Heizspalts zur Durchführung einer Splicestelle der Heißsiegelfolie und/oder durch Verkleinerung des Heizspalts nach Durchführung einer Splicestelle der Heißsiegelfolie. Insbesondere durch eine automatisierte Einstellung des Heizspalts kann die Verpackungsleistung signifikant erhöht werden.

Es kann auch von Vorteil sein, wenn die Heizleistung der Heizstrecke und/oder die Heizleistung des Siegelrollenpaars regelbar ist/sind, vorzugsweise in Abhängigkeit von der Art und/oder Dicke der Heißsiegelfolie, wobei bevorzugt die Heizleistung der Heizstrecke gleichmäßig über beide Heizschienen auf die Heißsiegelfolie übertragbar ist und/oder die Heizleistung des Siegelrollenpaars gleichmäßig über beide Siegelrollen auf die Heißsiegelfolie übertragbar ist. Dadurch kann eine Heißsiegelfolie je nach Art und/oder Dicke gezielt mit einer optimal darauf abgestimmten Heizleistung beaufschlagt werden. Im Ergebnis lässt sich dadurch auch eine Verbesserung der Verpackungsleistung erzielen.

Ein weiterer Aspekt der vorliegende Erfindung betrifft eine Schlauchbeutelverpackungsmaschine mit eine Vorrichtung nach einer der vorangehenden Ausführungen, wobei die Schlauchbeutelverpackungsmaschine ausgebildet ist, um einen Schlauchbeutel aus einer Heißsiegelfolie zu bilden und um diesen Schlauchbeutel der Vorrichtung in einem kontinuierlichen Strang in einer exakt oder im Wesentlichen horizontalen Richtung zuzuführen. Bei einer derartigen sogenannten horizontalen Schlauchbeutelverpackungsmaschine kommen die erfindungsgemäßen Vorteile besonders zur Geltung.

Es kann aber auch sinnvoll sein, wenn die Schlauchbeutelverpackungsmaschine wenigstens ein Abzugsrollenpaar aufweist, wobei, jeweils gemessen in Förderrichtung, der Abstand zwischen dem Abzugsrollenpaar und der Heizstrecke größer ist als der Abstand zwischen der Heizstrecke und dem Siegelrollenpaar, wobei der Abstand zwischen der Heizstrecke und dem Siegelrollenpaar vorzugsweise kleiner ist als 50%, 40%, 30%, 20% oder 10% der Länge der Heizstrecke. Durch die Verkürzung des Abstands zwischen der Heizstrecke und dem nachgeschalteten einzigen Siegelrollenpaar kann der Wärmeverlust während der Überbrückung des Abstands minimiert werden. Im Ergebnis kann die erforderliche Bruttoheizleistung der Heizstrecke verringert werden.

Da sich die Siegelrollen des Siegelrollenpaars nur in einem sehr kleinen lokal begrenzten Bereich berühren, erfolgt der Wärmeeintrag jeweils auch nur in einem sehr kleinen lokal begrenzten Bereich. Aus dem Wärmeeintrag pro Zeit ergibt sich die Fördergeschwindigkeit, die dementsprechend begrenzt ist. Durch die dem Siegelrollenpaar vorgeschaltete Heizstrecke kann der Wärmeeintrag in die Heißsiegelfolie vorgezogen und entsprechend eingestellt werden, sodass durch das Siegelrollenpaar nur noch ein kleiner Wärmeeintrag oder gar kein Wärmeeintrag in die Heißsiegelfolie mehr erforderlich ist, um die Längssiegelung zu bewerkstelligen.

Weitere bevorzugte Weiterbildungen der Erfindung ergeben sich durch Kombinationen der Merkmale, die in den Ansprüchen, der Beschreibung und den Zeichnungen offenbart sind.

### Kurze Beschreibung der Figuren

Es zeigen:
- Fig. 1: (Stand der Technik) schematisch und in Perspektivansicht eine herkömmliche Längssiegelvorrichtung mit drei Rollenpaaren, wobei ein Abzugsrollenpaar (kalt) ein Packmittel von einer Packmittelrolle abzieht, um daraus einen Schlauchbeutel zu bilden, wobei der Schlauchbeutel nach Aufnahme von Produkten, die in einem linearen Produktstrom zugeführt werden, einer Längssiegelung durch ein beheiztes und profiliertes Siegelrollenpaar und ein beheiztes oder kaltes profiliertes Siegelrollenpaar unterzogen wird.
- Fig. 2: (Stand der Technik) schematisch und in Perspektivansicht eine herkömmliche Längssiegelvorrichtung mit vier Rollenpaaren, wobei ein Abzugsrollenpaar (kalt) ein Packmittel von einer Packmittelrolle abzieht, um daraus einen Schlauchbeutel zu bilden, wobei der Schlauchbeutel nach Aufnahme von Produkten, die in einem linearen Produktstrom zugeführt werden, einer Längssiegelung durch zwei beheizte und profilierte Siegelrollenpaare und ein beheiztes oder kaltes profiliertes Siegelrollenpaar unterzogen wird.
- Fig. 3: (Stand der Technik) schematisch und in Perspektivansicht eine herkömmliche Längssiegelvorrichtung mit drei Rollenpaaren und einer Vorheizstrecke, wobei ein Abzugsrollenpaar (kalt) ein Packmittel von einer Packmittelrolle abzieht, um daraus einen Schlauchbeutel zu bilden, wobei der Schlauchbeutel nach Aufnahme von Produkten, die in einem linearen Produktstrom zugeführt werden, einer Längssiegelung durch ein beheiztes und profiliertes Siegelrollenpaar unterzogen wird, anschließend eine Vorheizstrecke durchläuft und schließlich von einem weiteren beheizten oder kalten profilierten Siegelrollenpaar bearbeitet wird.
- Fig. 4: schematisch und in Perspektivansicht eine erfindungsgemäße Längssiegelvorrichtung für eine horizontale Schlauchbeutelverpackungsmaschine mit zwei Rollenpaaren und einer Vorheizstrecke, wobei ein Abzugsrollenpaar (kalt) ein Packmittel von einer Packmittelrolle abzieht, um daraus einen Schlauchbeutel zu bilden, wobei der Schlauchbeutel nach Aufnahme von Produkten, die in einem linearen Produktstrom zugeführt werden, eine Heizstrecke durchläuft und anschließend einer Längssiegelung durch ein beheiztes und profiliertes Siegelrollenpaar unterzogen wird, wobei Schnittansichten quer zur Förderrichtung durch die Heizstrecke sowie durch das einzige Siegelrollenpaar hervorgehoben dargestellt sind.

### Detaillierte Beschreibung des bevorzugten Ausführungsbeispiels

Im bevorzugten Ausführungsbeispiel der Erfindung, das nachstehend mit Bezug auf Figur 4 beschrieben wird, ist der Heizstrecke 18, die auch als Vorheizstrecke bezeichnet wird, in Förderrichtung F ein unbeheiztes bzw. kaltes Abzugsrollenpaar 14 vorgeschaltet, das zum Abzug des Packmittels in Gestalt einer Heißsiegelfolie 2 von einer Rolle 11 über zwei Walzen 12, 13 sowie zum Zusammenfügen der zu versiegelnden Heißsiegelfolie 2 und zum Transport des daraus gebildeten Schlauchbeutels 3 dient.

Die Heizstrecke 18 besteht aus zwei parallelen und gleich langen sowie sich unter Bildung eines Heizspalts gegenüberstehenden Heizschienen 18a, 18b. In den Heizschienen 18a, 18b ist eine Heizung (nicht dargestellt) eingebaut, welche durch eine geeignete Vorrichtung (nicht dargestellt) und aus einer geeigneten Quelle (nicht dargestellt) mit Energie versorgt wird. Die zwei Heizschienen 18a, 18b bilden einen Spalt, der als Heizspalt bezeichnet wird, durch welchen die übereinanderliegenden bzw. überlappenden randseitigen Abschnitte der Heißsiegelfolie 2 gezogen werden. Die Breite des Heizspalts ist einstellbar. Bei Stillstand der Maschine öffnen sich die Heizschienen 18a, 18b automatisch. Die Heizstrecke 18 dient zum Einbringen der zum Siegeln notwendigen Energie in die Heißsiegelfolie 2.

Der Heizstrecke 18 folgt in Förderrichtung F mindestens ein Rollenpaar. Im Ausführungsbeispiel gemäß Figur 4 ist nach der Heizstrecke 18 ein einziges Siegelrollenpaar 15 angeordnet. Dieses Siegelrollenpaar 15 weist an der Rollenmantelfläche ein Profil auf, welches beim Siegeln mittels Druck in die beiden aufgeschmolzenen und übereinanderliegenden Abschnitte der Heißsiegelfolie 2 geprägt wird, wodurch die Längssiegelnaht bzw. Flossennaht entsteht. Das Siegelrollenpaar 15 dient zum Transport des Schlauchbeutels 3 und kann beheizt, aber auch kalt sein.

Die Heizstrecke 18 hat im vorliegenden Ausführungsbeispiel eine Länge L. Die Höhe H der gegenüberliegenden und den Heizspalt bildenden Heizschienen 18a, 18b liegt beispielsweise im Bereich von 5 bis 20% der Länge L. Die Heizleistung der Vorheizstrecke 18 ist beispielsweise auf 2 x Q1 geregelt, wobei jede der Heizschienen 18a, 18b eine Heizleistung von Q1 übertragen kann.

Das einzige Siegelrollenpaar 15 mit minimaler Linienberührung weist eine geregelte Heizleistung von 2 x Q2 auf, wobei jede der Siegelrollen 15a, 15b eine Heizleistung von jeweils Q2 übertragen kann.

Bei Verwendung einer Hochleistungsverbundfolie als Heißsiegelfolie 2 zur Bildung der Schlauchbeutelverpackung erhöht sich die Fördergeschwindigkeit des Packmittels bzw. des daraus gebildeten Schlauchbeutels 3 gegenüber einer herkömmlichen Längssiegelvorrichtung mit zwei beheizten Siegelrollenpaaren (vgl. Fig. 1) beispielsweise um ca. 10 bis 20%.

Bei Verwendung einer Verbundfolie mit Alulayer als Heißsiegelfolie 2 zur Bildung der Schlauchbeutelverpackung erhöht sich die Packmittelgeschwindigkeit gegenüber einer herkömmlichen Längssiegelvorrichtung mit zwei beheizten Siegelrollenpaaren (vgl. Fig. 1) beispielsweise um ca. 100%. Die höhere Gesamtdicke der Verbundfolie mit Alulayer und die daraus resultierende höhere Wärmekapazität erfordern einen größeren Wärmeeintrag zur Aktivierung der Heißsiegelschicht für die nachfolgende Längssiegelung.

Bei Verwendung einer anderen Verbundfolie mit Alulayer als Heißsiegelfolie 2 zur Bildung der Schlauchbeutelverpackung erhöht sich die Packmittelgeschwindigkeit gegenüber einer herkömmlichen Längssiegelvorrichtung mit zwei beheizten Siegelrollenpaaren (vgl. Fig. 1) beispielsweise um ca. 70%.

Bei Verwendung einer wasserlöslichen Folie als Heißsiegelfolie 2 zur Bildung der Schlauchbeutelverpackung erhöht sich die Packmittelgeschwindigkeit beispielsweise um ca. 80%.

Je kleiner der Heizspalt zwischen den Heizschienen 18a, 18b ist, umso höher kann die maximale Packmittelgeschwindigkeit gewählt werden, da die Verkleinerung des Heizspalts zu einer Erhöhung der Kontaktkräfte und damit der Wärmeübergangskoeffizienten zwischen den Heizschienen 18a, 18b und der Heißsiegelfolie 2 führt. Bei einer Verkleinerung des Heizspalts zwischen den Heizschienen 18a, 18b auf einen Wert, der der doppelten Dicke der Heißsiegelfolie 2 entspricht, steigt die Packmittelgeschwindigkeit sprunghaft deutlich an.

Je größer der Heizspalt zwischen den Heizschienen 18a, 18b ist, umso geringer die max. Packmittelgeschwindigkeit.

Im Normalbetrieb besteht die Längssiegelnaht aus zwei sich überlappenden Abschnitten der Heißsiegelfolie 2. Eine Splicestelle, die durch Verbinden zweier Endabschnitte strangförmiger Heißsiegelfolien 2 mittels eines Klebestreifens gebildet wird, besteht dementsprechend aus vier Lagen Folie und zwei Lagen Klebestreifen.

Am Beispiel einer Heißsiegelfolie 2 mit einer Dicke D werden vorteilhafte Einstellungen des Heizspalts zwischen den Heizschienen 18a, 18b der Heizstrecke 18 sowie des Siegelspalts zwischen den Siegelrollen 15a, 15b des Siegelrollenpaares nachstehend erläutert.

Zur Erwärmung der aus den sich überlappenden Abschnitten der Heißsiegelfolie 2 gebildeten Flosse innerhalb der Heizstrecke werden der Heizspalt und der Siegelspalt zwischen den Siegelrollen 15a, 15b des Siegelrollenpaares 15 auf einen Wert von 2 x D eingestellt, der exakt oder im Wesentlichen (+/- 5%, +/- 2% oder +/- 1%) der doppelten Dicke der Heißsiegelfolie 2 entspricht.

Zur Durchführung einer Splicestelle, an der sich überlappende Endabschnitte zweier Stränge von Heißsiegelfolien 2 mit jeweils einer Dicke D überlappen und mit einem Klebestreifen mit einer Dicke von K verbunden sind, werden der Heizspalt und der Siegelspalt vergrößert und auf einen Wert eingestellt, der exakt oder im Wesentlichen der vierfachen Dicke D der Heißsiegelfolie zuzüglich der zweifachen Dicke K des Klebestreifens entspricht, d.h. 4 x D + 2 x K. Zur optimalen Heizspalteinstellung der Heizstrecke 18 ist es somit von Vorteil, die Heizschienen 18a, 18b unter Vergrößerung des Heizspalts für die Durchfahrt der Splicestelle kurzzeitig zu öffnen und nach Durchfahrt der Splicestelle unter Verkleinerung des Heizspalts wieder zu schließen. Da die Siegelrollen 15a, 15b im Siegelspalt mit Fördergeschwindigkeit des Schlauchbeutels 3 über die Längssiegelnaht abrollen, entsteht grundsätzlich weniger Reibung als an den stehenden Heizschienen 18a, 18b, an welchen die Heißsiegelfolie 2 über eine längere Wegstrecke vorbeigeführt wird. Aus diesem Grund, und weil die Siegelrollen 15a, 15b im Siegelspalt eine Profilierung der Längssiegelnaht bewerkstelligen, ist der Siegelspalt vorzugsweise kleiner als der Heizspalt.

Zusammenfassend arbeitet die hierin offenbarte Längssiegelvorrichtung 1 mit Vorheizstrecke 18 nach dem folgenden Funktionsprinzip:
Um die Qualität der Längssiegelung zu verbessern, die Maschineneinstellung bei empfindlichen Folien zu vereinfachen, eine Produktschonung zu gewährleisten und das Packmittel 2 auch bei höheren Fördergeschwindigkeiten zu siegeln, besteht die hierin offenbarte Längssiegelvorrichtung 1 aus mindestens einer Vorheizstrecke 18, mindestens einem Rollenpaar 14 vor und mindestens einem Rollenpaar 15 nach der Vorheizstrecke 18 in Förderrichtung F. Dabei sind alle Rollenpaare 14 vor der Vorheizstrecke 18 in Förderrichtung F kalt. Die Rollenpaare 15 nach der Vorheizstrecke 18 können beheizt oder kalt sein.

Dadurch bietet die hierin offenbarte Längssiegelvorrichtung 1 mit Vorheizstrecke 18 folgende Vorteile:
Die Kombination einer Heizstrecke 18 mit einem in Förderrichtung F vorgeschalteten Abzugsrollenpaar 15 und einem in Förderrichtung F nachgeschalteten Siegelrollenpaar 15 vereinfacht den mechanischen und elektrischen Aufbau der Heizstrecke 18 im Vergleich zu einer Vorrichtung, bei der die Beaufschlagung der Heißsiegelfolie 2 mit einer Heizleistung ausschließlich durch mehrere Siegelrollenpaare 15, 16 (vgl. Fig. 1) bzw. 15, 16, 17 (vgl. Fig. 2) erfolgt. Der mechanische und elektrische Aufbau der Heizstrecke 18 kann weiter vereinfacht werden, wenn das Siegelrollenpaar 15 nach der Heizstrecke 18 unbeheizt ausgeführt wird, sodass der gesamte Wärmeeintrag in die Heißsiegelfolie 2 innerhalb der Heizstrecke 18 erfolgt. Ein unbeheiztes Siegelrollenpaar 15 ist einfacher abzudichten und es entfallen die elektrischen Bauteile.

Durch den großen Bereich für den Energieeintrag der Heizstrecke 18 in die Heißsiegelfolie 2 erhöhen sich der Wirkungsgrad der Wärmeübertragung und der absolute Wärmeeintrag in die Heißsiegelfolie 2, was zu höheren Fördergeschwindigkeiten und einer geringen Abstrahlung von Restenergie in den Maschineninnenraum führt. Für die Verpackung von Schokolade und anderen temperaturempfindlichen Produkten sind zu hohe Temperaturen zu vermeiden.

Bei nur einem Abzugsrollenpaar 14 und einem einzigen Siegelrollenpaar 15 ist der Lauf der Heißsiegelfolie 2 leichter einzustellen und die Faltenbildung in der Längssiegelnaht verringert sich, wodurch sich die Qualität der Längssiegelnaht verbessert. Es entfällt der Aufwand, dass der Profilabdruck auf der Längssiegelnaht des ersten Siegelrollenpaares 15 von weiteren Siegelrollenpaaren genau getroffen werden muss. Dadurch sind auch druckempfindliche Heißsiegelfolien 2 leichter zu verarbeiten und der Packmittellauf ist generell stabiler.

### Bezugszeichenliste

- 1: Vorrichtung/Längssiegelvorrichtung
- 2: Verpackungsmaterial//Packmittel/Heißsiegelfolie
- 3: Schlauch/Schlauchbeutel
- 11: Rolle
- 12: Erste Walze
- 13: Zweite Walze
- 14: Abzugsrollenpaar
- 15: Erstes Siegelrollenpaar
- 15a: Erste Siegelrolle
- 15a: Zweite Siegelrolle
- 16: Zweites Siegelrollenpaar
- 17: Drittes Siegelrollenpaar
- 18: Heizstrecke
- 18a: Erste Heizschiene
- 18b: Zweite Heizschiene
- F: Förderrichtung
- P: Produkt

## Patentansprüche

1. Verfahren zur Längssiegelung von Schlauchbeutelverpackungen, umfassend die Schritte:
a. Schritt A: Bilden eines Schlauchbeutels (3) aus einer Heißsiegelfolie (2).
b. Schritt B: Erstmaliges Beaufschlagen des Schlauchbeutels (3) mit einer Heizleistung innerhalb einer Heizstrecke (18).
c. Schritt C: Längssiegelung des Schlauchbeutels (3) durch mindestens ein Siegelrollenpaar (15).

2. Verfahren nach Anspruch 1, **dadurch gekennzeichnet, dass** Schritt A wenigstens einen der folgenden Teilschritte aufweist:
a. Teilschritt A1: Bereitstellen einer Heißsiegelfolie (2) in einem kontinuierlichen Strang, vorzugsweise durch Abrollen von einer Rolle, wobei die Heißsiegelfolie (2) bevorzugt eine Dicke von wenigstens 30 µm, 40 µm, 50 µm oder 60 µm bis maximal 70 µm, 80 µm, 90 µm oder 100 µm aufweist.
b. Teilschritt A2: Spannen und/oder Glätten einer Heißsiegelfolie (2), vorzugsweise in einem kontinuierlichen Strang.
c. Teilschritt A3: Bilden einer Splicestelle durch Überlagern eines Endabschnitts eines ersten Strangs einer Heißsiegelfolie (2) mit einem Endabschnitts eines zweiten Strangs einer Heißsiegelfolie (2) und Verbinden der Endabschnitte der ersten und zweiten Stränge der Heißsiegelfolie (2) mit wenigstens einem Klebestreifen.
d. Teilschritt A4: Zuführen von Produkten (P) zu der Heißsiegelfolie (2), vorzugsweise in einem kontinuierlich geförderten Produktstrom, bevorzugt zu einer Unterseite der in einem kontinuierlichen Strang exakt oder im Wesentlichen in horizontaler Richtung geförderten Heißsiegelfolie (2), besonders bevorzugt unter Verwendung eines Formschuhs.
e. Teilschritt A5: Anordnen der Heißsiegelfolie (2) in Schlauchform zur Bildung des Schlauchbeutels, vorzugsweise in einem kontinuierlichen Strang, bevorzugt unter Ausbildung einer Flosse aus zwei sich überlappenden Abschnitten der Heißsiegelfolie (2), besonders bevorzugt durch Zusammenfügen seitlicher Ränder der Heißsiegelfolie (2), ganz besonders bevorzugt unter Verwendung einer Formschulter und/oder durch Einzug der Heißsiegelfolie (2) in den Walzenspalt eines Abzugsrollenpaars (14).
f. Teilschritt A6: Aufnahme von Produkten (P) in der schlauchförmig angeordneten Heißsiegelfolie (2).
g. Teilschritt A7: Förderung der Heißsiegelfolie (2), vorzugsweise in einem kontinuierlichen Strang, bevorzugt durch Antreiben einer oder beider Rollen des Abzugsrollenpaars (14) und/oder des Siegelrollenpaars (15).

3. Verfahren nach einem der vorangehenden Ansprüche, **dadurch gekennzeichnet, dass** Schritt B wenigstens einen der folgenden Teilschritte aufweist:
a. Teilschritt B1: Einziehen einer aus zwei überlappenden Abschnitten der Heißsiegelfolie (2) gebildeten Flosse in den Heizspalt zwischen zwei gegenüberliegenden Heizschienen (18a, 18b) der Heizstrecke (18), vorzugsweise in einem kontinuierlichen Strang.
b. Teilschritt B2: Einstellen des Heizspalts in Abhängigkeit von einer Dicke der Heißsiegelfolie (2), vorzugsweise auf einen Wert, der exakt oder im Wesentlichen so groß ist wie die doppelte Dicke der Heißsiegelfolie (2), bevorzugt derart, dass beide Heizschienen (18a, 18b) der Heizstrecke (18) die Heißsiegelfolie (2) kontaktieren, besonders bevorzugt über die gesamte Länge und/oder Höhe jeder Heizschiene (18a, 18b).
c. Teilschritt B3: Vergrößern des Heizspalts, vorzugsweise zur Durchführung einer Splicestelle der Heißsiegelfolie (2) durch den Heizspalt, bevorzugt auf einen Wert, der exakt oder im Wesentlichen so groß ist wie vierfache Dicke der Heißsiegelfolie (2) zuzüglich der doppelten Dicke eines Klebestreifens, besonders bevorzugt in Verbindung mit einer Verringerung der Fördergeschwindigkeit der Heißsiegelfolie (2).
d. Teilschritt B4: Verkleinern des Heizspalts, vorzugsweise nach Durchführung einer Splicestelle der Heißsiegelfolie (2) durch den Heizspalt, bevorzugt auf einen Wert, der exakt oder im Wesentlichen so groß ist wie die doppelte Dicke der Heißsiegelfolie (2), besonders bevorzugt in Verbindung mit einer Erhöhung der Fördergeschwindigkeit der Heißsiegelfolie (2).
e. Teilschritt B5: Beaufschlagen der Heißsiegelfolie (2) im Bereich der Heizstrecke (18) mit einer Heizleistung im Bereich von 100 bis 500 W, im Bereich von 200 bis 400 W, oder mit einer Heizleistung von 300 W, vorzugsweise gleichmäßig über beide Heizschienen (18a, 18b) der Heizstrecke (18), bevorzugt gleichmäßig über die Länge und/oder Höhe jeder der beiden Heizschienen (18a, 18b) der Heizstrecke (18).
f. Teilschritt B6: Fördern der Heißsiegelfolie (2) im Bereich der Heizstrecke (18) mit einer Fördergeschwindigkeit im Bereich von 0,2 m/s, 0,5 m/s, 0,75 m/s oder 1 m/s bis 1,5 m/s, 2 m/s, 2,5 m/s, 3 m/s, 4 m/s oder 5 m/s.
g. Teilschritt B7: Erwärmen der Heißsiegelfolie (2) im Bereich der Heizstrecke (18) von einer Temperatur im Bereich von 10°C, 15°C oder 20°C bis 25°C, 30°C oder 35°C auf eine Temperatur im Bereich von 50°C, 75°C oder 90°C bis 100°C, 125°C oder 150°C.

4. Verfahren nach einem der vorangehenden Ansprüche, **dadurch gekennzeichnet, dass** Schritt C wenigstens einen der folgenden Teilschritte aufweist:
a. Teilschritt C1: Einziehen einer aus zwei sich überlappenden Abschnitten der Heißsiegelfolie (2) gebildeten Flosse in den Siegelspalt zwischen den Siegelrollen (15a, 15b) des Siegelrollenpaars (15), vorzugsweise in einem kontinuierlichen Strang.
b. Teilschritt C2: Beaufschlagen der Heißsiegelfolie (2) im Bereich des Siegelrollenpaars (15) mit einer Heizleistung im Bereich von 200 bis 1000 W, im Bereich von 400 bis 600 W, oder mit einer Heizleistung von 560 W, vorzugsweise gleichmäßig über beide Siegelrollen (15a, 15b) des Siegelrollenpaars (15).
c. Teilschritt C3: Fördern der Heißsiegelfolie (2) im Bereich des Siegelrollenpaars (15) mit einer Fördergeschwindigkeit im Bereich von 0,2 m/s, 0,5 m/s, 0,75 m/s oder 1 m/s bis 1,5 m/s, 2 m/s, 2,5 m/s, 3 m/s, 4 m/s oder 5 m/s.
d. Teilschritt C4: Erwärmen der Heißsiegelfolie (2) im Bereich des Siegelrollenpaars (15) auf eine Temperatur im Bereich von 75°C, 100°C oder 125°C bis 150°C, 175°C oder 200°C.
e. Teilschritt C5: Profilieren der Heißsiegelfolie (2) auf Endkontur durch Prägen des Profils der Siegelrollen (15a, 15b) des Siegelrollenpaars (15) auf die Flosse.
f. Teilschritt C6: Bildung luftdichter Schlauchbeutelverpackungen unter Einschluss jeweils wenigstens eines Produkts (P) jeweils durch Quersiegelung des Schlauchbeutels (3).
g. Teilschritt C7: Abtrennen einzelner Schlauchbeutelverpackungen jeweils im Bereich einer Quersiegelnaht.

5. Vorrichtung (1) zur Längssiegelung von Schlauchbeutelverpackungen, vorzugsweise für horizontale Schlauchbeutelverpackungsmaschinen, umfassend mindestens ein Siegelrollenpaar (15) zur Längssiegelung eines aus einer Heißsiegelfolie (2) gebildeten Schlauchbeutels (3), wobei dem Siegelrollenpaar (15) eine Heizstrecke (18) vorgeschaltet ist, um die Heißsiegelfolie (2) vor der Längssiegelung des Schlauchbeutels (3) erstmalig und/oder ausschließlich innerhalb der Heizstrecke (18) mit einer Heizleistung zu beaufschlagen.

6. Vorrichtung (1) nach Anspruch 5, **dadurch gekennzeichnet, dass** die Heizstrecke (18) eine Länge im Bereich von 50 bis 200 mm, vorzugsweise im Bereich von 100 bis 150 mm aufweist.

7. Vorrichtung (1) nach einem der Ansprüche 5 oder 6, **dadurch gekennzeichnet, dass** der Heizspalt zwischen den Heizschienen (18a, 18b) der Heizstrecke (18) einstellbar ist, vorzugsweise automatisch, bevorzugt in Abhängigkeit von einer Dicke der Heißsiegelfolie (2), besonders bevorzugt durch Vergrößerung des Heizspalts zur Durchführung einer Splicestelle der Heißsiegelfolie (2) und/oder durch Verkleinerung des Heizspalts nach Durchführung einer Splicestelle der Heißsiegelfolie (2).

8. Vorrichtung (1) nach einem der Ansprüche 5 bis 7, **dadurch gekennzeichnet, dass** die Heizleistung der Heizstrecke (18) und/oder die Heizleistung des Siegelrollenpaars (15) regelbar ist/sind, vorzugsweise in Abhängigkeit von der Art und/oder Dicke der Heißsiegelfolie (2), wobei bevorzugt die Heizleistung der Heizstrecke (18) gleichmäßig über beide Heizschienen (18a, 18b) auf die Heißsiegelfolie (2) übertragbar ist und/oder die Heizleistung des Siegelrollenpaars (15) gleichmäßig über beide Siegelrollen (15a, 15b) auf die Heißsiegelfolie (2) übertragbar ist.

9. Schlauchbeutelverpackungsmaschine mit einer Vorrichtung (1) nach einem der Ansprüche 5 bis 8, **dadurch gekennzeichnet, dass** die Schlauchbeutelverpackungsmaschine ausgebildet ist, um einen Schlauchbeutel (3) aus einer Heißsiegelfolie (2) zu bilden und um diesen Schlauchbeutel (3) der Vorrichtung (1) in einem kontinuierlichen Strang in einer exakt oder im Wesentlichen horizontalen Richtung zuzuführen.

10. Schlauchbeutelverpackungsmaschine nach Anspruch 9, **dadurch gekennzeichnet, dass** die Schlauchbeutelverpackungsmaschine wenigstens ein Abzugsrollenpaar (14) aufweist, wobei, jeweils gemessen in Förderrichtung (F), der Abstand zwischen dem Abzugsrollenpaar (14) und der Heizstrecke (18) größer ist als der Abstand zwischen der Heizstrecke (18) und dem Siegelrollenpaar (14), wobei der Abstand zwischen der Heizstrecke (18) und dem Siegelrollenpaar (14) vorzugsweise kleiner ist als 50%, 40%, 30%, 20% oder 10% der Länge der Heizstrecke (18).
